# EUROPEAN PATENT APPLICATION

(11) **EP 0 798 677 A1**
(43) Date of publication of application: **01.10.1997**
(21) Application number: 96105006.9
(22) Date of filing: 29.03.1996
(51) Int. Cl.: G07F 17/42, G07G 5/00, G07F 7/00

(54) **Automatic receipt-emitting apparatus**

(71) Applicant: Leone, Riccardo, 80128 Napoli (IT)
(72) Inventor: Leone, Riccardo, 80128 Napoli (IT)
(74) Representative: Coloberti, Luigi

(57) **Abstract**

An automatic payment receipt-emitting apparatus for issuing payment receipts to an user. The apparatus comprises in combination: control keyboard or item selecting means (11), a printing machine (14) for emitting a receipt, a display (13) and a credit card reader (12) operatively connected to a control unit (10), comprising memory means (10A) having at least one electronic library containing reference data relating to the individual items and the corresponding costs to be printed on the receipt at the time of the request and issue thereof, as well as program means in the control unit (10) for revealing the type of credit card for debiting the user with the calculated amount and activating the printing machine (14) for emitting the receipt.

## Description

The present invention relates to an automatic apparatus for emitting printed payment or tax receipts, which can be used directly by the user herself to effect the payment by a credit card of magnetic or chip type and to receive a payment or tax receipt which is automatically printed and issued with written data and informations on the requested product or item and their corresponding cost, without the need for any action by a sales assistant.

At present, in the large-scale and small-scale distribution of consumer goods and food products, for example, or in the catering sector, widespread use is made of cash registers which issue payment or tax receipts after the trader or a sales employee has cashed the amount corresponding to the product or items required by the customer and after the said employee has keyed-in the corresponding amount on a control keyboard.

In general, various types of cash registers have been developed so as to enable also automatic payment by means of credit cards, but they require, nevertheless, the presence of the sales assistant who must necessarily read off the price of the item purchased, key it in on the keyboard of the cash register and wait for the customer to effect payment automatically by means of his credit card of pre-paid type or activating a banking circuit to which the cash register is connected.

It is also known of various applications of automatic machines for issuing tickets and/or receipts which enable certain operations to be performed, directly or after insertion of another magnetic receipt, or pre-paid magnetic card, from which in each case a predetermined amount is deducted; a typical application of these systems relates, for example, to the collection of motorway tolls.

In response to these specific applications, the current situation in the small-scale or large-scale distribution of various consumer goods to the public is such that there is currently no alternative solution to the use of traditional cash registers which necessarily require the presence of a sales assistant for collecting the amount and issuing the payment or tax receipt; therefore, in trading premises which are used by a lot of people, the consumer often has to queue up for a long time, both in order to pay beforehand for the drink or article required and in order to obtain the necessary tax receipt.

The object of the present invention is to overcome these drawbacks by providing an apparatus according to claim 1 by means of which payment or tax receipts can be automatically requested by and issued to the customer for any kind of product or item which can be selected from a suitable pre-defined list of products or items, and payment effected with a credit card by the same user, resulting in a substantial reduction in the amount of waiting time and a consequent increase in efficiency in dealings between the trader and consumer.

According to the present invention, therefore, issuing of payment or tax receipts and collecting of the corresponding amount can be carried out automatically, giving the consumer the possibility of performing the entire operation on his own by means of payment with a credit card of pre-payment type or via some other automatic payment system which requires the use of a magnetic chip card designed to enable a banking circuit.

The automatic receipt emitting apparatus substantially consists of a reader for authorised cards, connected to a central processing unit comprising a listing of selectable items and relative costs in a memory, and program means by means of which the amount corresponding to the total cost of the requested items is debited or deducted, and a printing machine which issues, on the associated paper sheet, a payment or tax receipt for the amount debited on the ground of data inputted by the same user on an item selecting means such as a keyboard, and informations provided by said program means.

The key component of the apparatus is therefore a central processing unit having memory means containing one or more electronic libraries comprising data and informations relating to the products or items which can be requested and their corresponding costs. These magnetic libraries are programmed in non-volatile memories of EPROM type which, in view of their special nature, can be replaced every time it is required to update both the articles available and their corresponding prices.

The central processing unit manages the entire apparatus which can be in the form of a small practical cabinet provided, at the front, with a display on which all the necessary details and instructions are shown, in addition to a keyboard directly provided with the names of the articles, or corresponding alphanumeric codes, by means of which it is possible to obtain issue of a printed payment or tax receipt to exhibit to a sales employee, avoiding to queue up for a long time at a traditional cash till. In short, once the customer has chosen the desired article or articles, will press the key or keys corresponding to the chosen article, and the machine, after introduction of the credit card, will perform the necessary checks and debit the amount owed, automatically issuing the corresponding receipt sheet.

The automatic apparatus for emitting payment or tax receipts according to the invention has proved to be particularly useful in public trading premises which are used by a lot of people, for example bars in airport terminals, at railway stations, motorway service stations and the like, and in general wherever issue of a payment or tax receipt is required in advance.

More precisely according to the invention an automatic receipt-emitting apparatus has been provided for automatically emitting a payment receipt upon activation by an user through a credit card having a credited amount characterized by comprising:
- a programmable control unit, and memory means comprising an electronic library provided with a listing of selectable items and corresponding costs stored in said memory means;
- credit card reading means connected to a data inlet of the programmable control unit for providing said control unit with informations relating to the amount credited to said credit card;
- items selecting means for entering informations in said control unit relating to at least one item selected from the listing in said electronic library stored in said memory means;
- and program means in said control unit, said program means comprising first program data to calculate the total cost of the items selected from said electronic library, verify the amount credited to said credit card, and compare said verified credit amount to said total cost;
- second program data in said program means for debiting the calculated total cost of the selected items to said credit card in said cart reading means, and to provide data signal to said control unit;
- and a receipt printing device activated by said control signal from said control unit for printing-out a receipt having written data of the selected items and their total cost.

According to present invention, the program means preferably are working in time-shearing, by which the control unit manages cyclically all data and informations storing them into suitable buffer memories, to control peripheral units such as card reader, display and receipt printing machine.

The general features of the invention will be described more clearly hereinbelow, with reference to the accompanying drawings, in which:

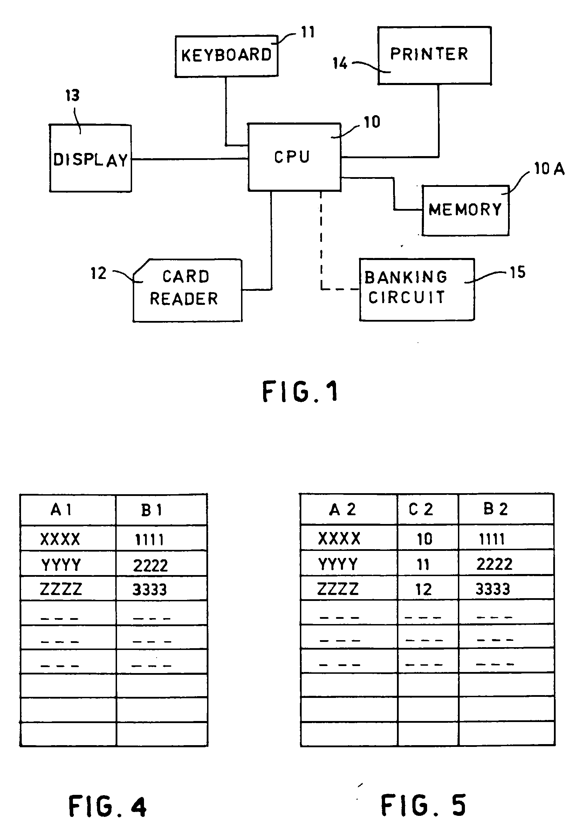

- Fig. 1: is a general block diagram of the apparatus according to the present invention;
- Fig. 2: is a flow chart for the apparatus of Figure 1, showing the main route;
- Fig. 3: is a flow chart showing an additional route for a banking circuit.
- Fig. 4: shows the layout of a first possible electronic library stored in a programmable memory means of a central processing unit of the apparatus according to Figure 1, designed to provide informations relating to a direct correspondence between each selectable product or article, and the corresponding price;
- Fig. 5: shows the layout of a possible variant of the electronic library comprising a numeric or alphanumeric code indicating each product or item which can be selected, and the corresponding price.

In its more general embodiment, the automatic apparatus for emitting a payment or tax receipt according to the invention, substantially comprises a central processing unit 10 (CPU) having a readable memory 10A, connected to an article selecting means such as a control keyboard 11 for entering informations and data in the central unit 10 about a request for emitting a payment receipt, and a card reader 12 suitable for use with authorised credit cards, such as pre-paid credit cards, chip cards or which can be used on any suitably enabled banking circuit 15.

The CPU 10 is moreover connected to a display 13 and to a printing machine 14 for printing out and issuing payment or tax receipts, as well as can also be connected to any banking circuit 15 for the purpose referred to above.

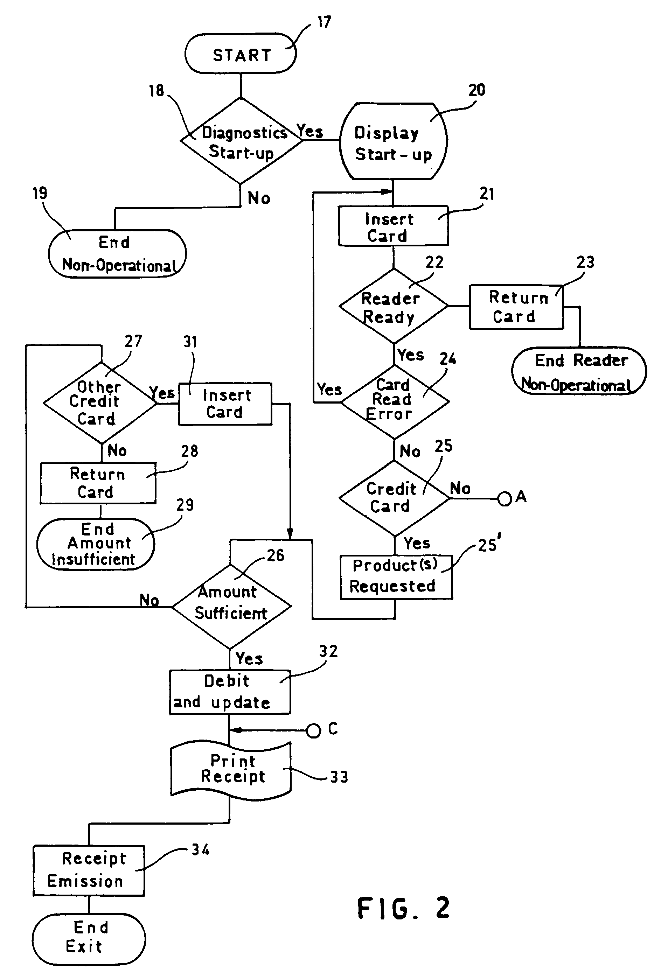

The CPU 10 is provided with memory means 10A comprising program means to carry out all the checking and control operations, as well as program means for calculating and debiting the calculated amount, as indicated for example in the flow chart of Figure 2; a main feature of the invention consists in the storage, inside the memory 10A of the CPU 10, of at least one electronic library ensuring correspondence of data and details between the items which can be selected, any reference codes therefore and the corresponding costs.

Figure 4 of the drawings shows a first possible embodiment of an electronic library in the memory 10A which has stored inside it, in direct correspondence, the names of the products or items which can be selected, shown in the column A1, in the same sequence as that listed on the command keyboard 11, and the corresponding costs, shown in the column B1. The electronic library is suitably stored in a non-volatile EPROM memory programmed to cause the various written information and details in the table to appear directly on the display 13. In this case, as mentioned above, specific keys on the control keyboard 11 must be provided with the necessary written informations or details relating to column A1 of the table shown in Figure 4.

Figure 5, on the other hand, shows a second embodiment of the layout of an electronic library which can be used for a more complex apparatus designed to issue payment or tax receipts for a greater number of products or items.

In contrast with the previous example, the table of the electronic library shown in Figure 5 still comprises a column A2 with the details or the names of the various selectable products or items, a column B2 containing the corresponding prices, and a third column C2 showing numeric or alphanumeric codes corresponding to the various items in the column A2, which must be keyed-in on the keyboard 11 in order to select the desired product or item and issue the corresponding payment or tax receipt.

The features and the operating mode of the automatic dispenser of tax receipts according to the present invention will be explained hereinbelow more in detail with reference to the flow chart shown in Figure 2.

After the activation, start step 17, the apparatus performs an initial diagnostic check, step 18, the outcome of which may be either negative (NO), resulting in termination of the process with the apparatus being made non-operational (step 19), or positive (YES), thereby initiating step 20 so that the necessary instructions to be carried out and/or informations for the user will appear on the display 13; in particular, the display 13 shows the written details of the selectable items with the relative costs, as well as the request for insertion of the credit card (step 21).

After insertion of the credit card, step 22, the apparatus will carry out the initial diagnostics check on the reader 12, and if it detects an anomaly (NO), the apparatus will return the credit card (step 23), assuming the non-operational condition.

If the outcome of the diagnostics check on the reader is positive (YES), the apparatus passes to the next step 24 where the credit card is read. In this case also, if a read error is detected (YES), the system returns again to step 21 where the card is inserted.

Otherwise, if no card read error is detected (NO), in step 25 the apparatus checks about the type of card to verify whether the card in question is a pre-paid credit card (YES) or whether it is of different type (NO).

The user now read on the display the instruction for entering the request for the desired item or items, step 25', by pressing a key or keys of the keyboard 11 relating to item or items to be requested.

In the case (YES), of a magnetic or pre-paid credit card, the apparatus therefore checks whether the amount existing on the card is sufficient to cover the total cost (step 26).

If the outcome of step 26 is negative (NO), a sub-route will be performed and the request for the insertion of another credit card sufficient to cover the cost will appear on the display 13 (step 27). If the new credit card is not inserted (NO), the apparatus passes to step 28 where the previous card containing an insufficient amount is returned, resulting in termination of the procedure at step 29. Otherwise, if the new credit card is inserted (YES), step 31, the apparatus will return to step 26 for recalculation of the amount sufficient to cover the cost.

A positive response (YES) results in the system passing to the next step 32, where the total amount is debited and the credit card updated, thereby starting step 33 where the tax receipt is printed. At the end of step 33, the apparatus returns the credit card (step 34) and issues the receipt, terminating the entire procedure.

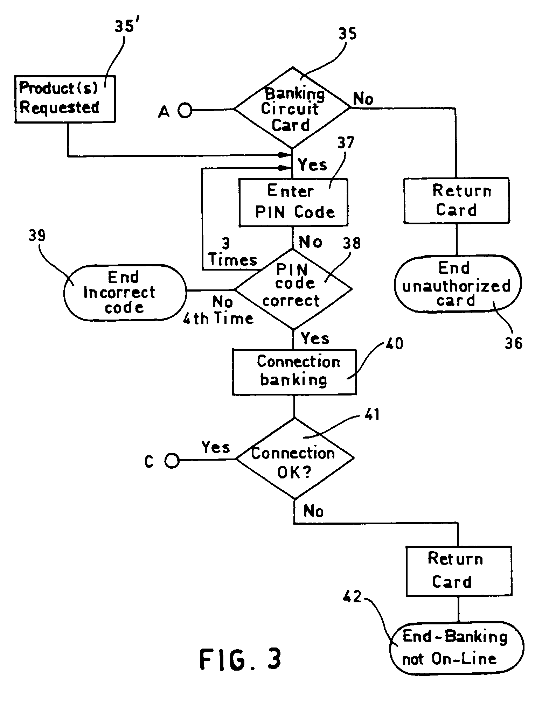

In the case where it is detected that the credit card is authorised for entering a banking circuit, from step 25 the system passes to step 35 of figure 3 in which a check is carried out as to whether the credit card is authorised for that particular banking circuit 15 the sub-route of figure 3 may be provided in combination or in substitution of the route from 25 to 32 of figure 2.

If the result is negative (NO), the procedure terminates with the non-authorised card being returned (step 36).

The user now read again the instruction for entering a request for the desired product or products to select by means of the keyboard 11; therefore if the answer to step 36 is affirmative (YES), the system proceeds to step 37 where the PIN code is entered by the user, with verification or re-verification thereof in step 38, resulting in termination of the procedure owing to an incorrect PIN code (step 39), or enabling of the connection to the banking circuit (step 40) for authorisation of the purchase.

If the outcome of the connection to the banking circuit is negative (NO), step 41, the credit card is returned again and the procedure ends with step 42. Otherwise, if the request for connection to the banking circuit is affirmative (YES), from step 41 the system passes to step 33 again where the tax receipt is printed and issued and the used card returned, as indicated in step 34, terminating again the procedure.

In all cases, a payment or tax receipt will be automatically issued showing details corresponding to the amount paid and with an indication of the article or the articles selected or requested. In all cases, the display will show the written data with any details or necessary information.

After issuing of the tax receipt, the machine returns into the standby condition, ready for the issue of a new tax receipt.

From the above description and illustration with reference to the accompanying drawings it will therefore be obvious that it has been possible to provide an automatic dispenser of tax receipts suitably designed for use with credit cards and in particular suitable for the purchase of any type of article or item in sales areas frequented by the public, by means of which the user himself can request automatic issue of a tax receipt for an amount equivalent to the cost of the article or the articles required, without having to queue up at the normal tills or traditional payment and tax-receipt issuing systems. In this way, by arranging several apparatuses, made accessible to the public, within a same area or in different locations, the waiting times are drastically reduced, with a consequent increase in the efficiency of the trading operation and reduction in the inconvenience for the consumer.

## Claims

1. An automatic receipt-emitting apparatus for automatically emitting a payment receipt upon activation by an user through a credit card having a credit amount, characterized by comprising:
- a programmable control unit (10), and memory means (10A) comprising an electronic library provided with a listing (A1, B1; A2, B2, C2) of selectable items and corresponding costs stored in said memory means (10A);
- credit card reading means (12) connected to a data inlet of the programmable control unit (10) for providing said control unit (10) with informations relating to the amount credited to said credit card;
- items selecting means (11) for entering informations in said control unit relating to at least one selected item from the listing in said electronic library stored in said memory means (10A);
- and program means in said control unit said program means comprising first program data to calculate the total cost of the items selected from said electronic library, verify the amount credited to said credit card, and compare said verified credit amount to said total cost;
- second program data in said program means for debiting the calculated total cost of the selected items to said credit card in said cart reading means, and to provide data signal to said control unit (10);
- and a receipt printing device (14) activated by said control signal from said control unit (10) for printing-out a receipt having written data of the selected items and their total cost.

2. An automatic receipt-emitting apparatus according to Claim 1, in which said credit card is of pre-payment type, characterized in that said program means comprises program data to request a supplemental credit card if the amount credited in a previously verified credit card is insufficient to cover said total cost.

3. An automatic receipt-emitting apparatus according to Claim 1, in which said credit card is of the type for entering into a banking circuit (15), characterized by comprising control means for connecting said control unit (10) to the banking circuit, and in that said program means comprises program data for verifying whether said credit card is an authorized card and for connecting said control unit (10) to said banking circuit (15).

4. An automatic receipt-emitting apparatus according to Claim 1, characterized in that said electronic library comprises at least one table data listing the name of the selectable items and corresponding costs and display means (13) connected to said control unit (10) for providing readable informations and data about selected items and their total cost on the ground of informations received by said program means.

5. An automatic receipt-emitting apparatus according to Claim 1, characterized in that said electronic library in said memory means (10A) comprises at least one table data listing coded reference data of the selectable items and data of corresponding costs.

6. An automatic receipt-emitting apparatus according to any one of previous claims, characterized in that said item selecting means (11) comprises keyboard means (11) provided with listing of names and/or reference data of the items selectable with said keyboard means (11).
